Europäisches Patentamt

European Patent Office

Office européen des brevets

(19)

(11) EP 0 507 087 B1

(12) **EUROPÄISCHE PATENTSCHRIFT**

(45) Veröffentlichungstag und Bekanntmachung des Hinweises auf die Patenterteilung:
**18.09.1996 Patentblatt 1996/38**

(51) Int Cl.6: **H04B 1/713**

(21) Anmeldenummer: **92103518.4**

(22) Anmeldetag: **29.02.1992**

(54) **Verfahren und Einrichtung zur korrelativen digitalen Signalverarbeitung mit systolischem Arithmetik-Schaltwerk**

Method and apparatus for correlative digital signal processing using systolic arithmetic circuit

Procédé et dispositif pour le traitement corrélatif numérique d'un signal comprenant un circuit arithmétique systolique

(84) Benannte Vertragsstaaten:
**AT BE CH DE ES FR GB IT LI NL PT SE**

(30) Priorität: **07.03.1991 DE 4107300**

(43) Veröffentlichungstag der Anmeldung:
**07.10.1992 Patentblatt 1992/41**

(73) Patentinhaber: **ABB PATENT GmbH
D-68309 Mannheim (DE)**

(72) Erfinder:
- **Dostert, Klaus, Dr.-Ing.
W-6751 Krickenbach (DE)**
- **Baier, Paul Walter, Prof Dr.-Ing.
W-6750 Kaiserslautern 32 (DE)**

(74) Vertreter: **Rupprecht, Klaus, Dipl.-Ing. et al
c/o ABB Patent GmbH,
Postfach 10 03 51
68128 Mannheim (DE)**

(56) Entgegenhaltungen:
**EP-A- 0 026 877          DE-A- 3 735 374**

- **PROCEEDINGS OF THE IEEE Bd. 75, Nr. 9, September 1987, NEW YORK US Seiten 1192 - 1202 HATAMIAN ET AL 'Parallel Bit-Level Pipelined VLSI Design for High-Speed**
- **Signal Processing'**
- **33RD ISSCC Februar 1986, NY Seiten 194 - 195 EL GAMAL 'High-Speed Digital Circuit Technology'**

**Beschreibung**

Die Erfindung betrifft ein Verfahren und eine Einrichtung zur korrelativen empfängerseitigen digitalen Signalverarbeitung, wie sie z.B. beim Empfang von digitalen Informationen, die mit dem bandspreizenden Nachrichtenübertragungsverfahren "Frequenzsprungmodulation" übertragen werden, erforderlich ist.

Zur anschaulichen Beschreibung der Erfindung wird im folgenden eine Empfangseinrichtung, die Bestandteil eines Systems zur Übermittlung digitaler Informationen über Stromversorgungsleitungen innerhalb oder außerhalb von Gebäuden - vorwiegend auf der Niederspannungsebene - ist, an geeigneten Stellen als Anwendungsbeispiel angeführt. Das System soll in hohem Maße resistent gegen Störungen auf den Stromversorgungsleitungen sein und trotz der widrigen Übertragungseigenschaften dieser Leitungen eine zuverlässige Kommunikation erlauben. Des weiteren soll die gleichzeitige Aktivität vieler solcher Übertragungssysteme am selben Stromnetz ohne gegenseitige Störbeeinflussung gewährleistet sein (Vielfachzugriff auf dasselbe Frequenzband).

Es ist Stand der Technik, zur Informationsübertragung über Stromversorgungsnetze Systeme mit schmalbandiger oder auch mit breitbandiger, bandspreizender Modulation einzusetzen - siehe z.B. die Druckschriften DE-A1 40 01 265, DE-A1 40 01 266, EP-B1-020 016 und EP-B1-0199 148.

Untersuchungen der Erfinder an zahlreichen Stromnetzen verschiedener Ausdehnung und Beschaffenheit - innerhalb und außerhalb von Gebäuden - haben gezeigt, daß das Bandspreizverfahren "Frequenzsprungmodulation" (engl.: frequency hopping) anderen Verfahren wie z.B. "pseudozufällige Phasensprungmodulation" (engl.: phase hopping oder direct sequencing), die technisch einfacher zu realisieren sind, klar überlegen ist.

Weiterhin ist aus der DE-A1-37 35 374 eine digitale Korrelatorschaltung in C-MOS-Gate-Array-Technologie bekannt, mit n-stufig getakteten Dateneingabe- und Referenzdatenregistern und einer Summierschaltung mit n-Eingängen, an die jeweils über ein Multiplizierglied Ausgänge der beiden Register angeschlossen sind.

Die EP-A-0 026 877 beschreibt ein Verfahren und eine Anordnung zur Korrelation von zwei Signalen, die mit unterschiedlichen Abtastfrequenzen abgetastet werden. Die Abtastwerte werden miteinander multipliziert, wobei jeweils der gleichen Zeitverschiebung zwischen den Abtastwerten entsprechende Multiplikationsergebnisse in einem Summationsspeicher getrennt summiert werden, um Stützwerte einer Korrelationsfunktion zu bilden.

Die hohen Anforderungen, die, an Einrichtungen zum optimalen korrelativen Empfang frequenzsprungmodulierter Bandspreizsignalformen bei der störsicheren Übertragung digitaler Informationen über Stromversorgungsleitungen gestellt werden, verdeutlicht das folgende Systembeispiel:

Ausgangspunkt der Betrachtungen ist die Übertragung binärer Informationen mit schnellen Frequenzsprüngen, d. h. während der Dauer $T_B$ eines Datenbits wird die Sendefrequenz sprungartig m-mal gewechselt, mit m=3,5,7... Je größer m gewählt wird, umso störresistenter erfolgt die Informationsübertragung. Bei fester Datenrate $r_0=1/T_B$ ist m durch die verfügbare Bandbreite B einerseits und durch die Grenzen der Präzision bei der Synchronisation andererseits beschränkt.

Auf Stromversorgungsleitungen ist das für Informationsübertragung verfügbare Frequenzband durch Vorschriften der Deutschen Bundespost auf 30kHz bis 146 kHz festgelegt; daraus ergibt sich die verfügbare Bandbreite B=116kHz.

Wenn beispielsweise binäre Informationen mit einer Datenrate (Bitrate) $r_0$= 60bit/s mittels Frequenzsprungverfahren zu übertragen sind, wobei m=5 Frequenzsprünge während einer Datenbitdauer $T_B$ erfolgen sollen, dann ist die Frequenzsprungrate $h=300s^{-1}$. Der Kehrwert T=1/h der Frequenzsprungrate gibt die Dauer des Zeitintervalls an, während dessen jeweils eine der m Frequenzen gesendet wird.

Die Nachrichtentheorie besagt, daß in einem Frequenzband der Breite B=116 kHz bei der Frequenzsprungrate $h=300s^{-1}$ maximal eine Anzahl

$$N=\lceil B/h\rceil=\lceil 116.000/300\rceil=386$$

Signale mit jeweils um 300Hz versetzter Frequenz gleichzeitig übertragen werden können und ohne gegenseitige Störbeeinflussung von Empfängern, die korrelative Signalverarbeitung durchführen, fehlerfrei detektiert werden können. $[\lceil\cdot\rceil$ bedeutet ganzzahliger Anteil von $(\cdot)]$

An den Leitungen eines Stromnetzes, z.B. in einem weitläufigen Gebäude, könnten entsprechend obigem Beispiel maximal N/2=193 Übertragungskanäle mit einer Datenrate von je 60bit/s gleichzeitig aktiv sein, ohne gegenseitige Störbeeinflussung. Entscheidende Voraussetzung dafür ist eine hochpräzise Signalerzeugung und das genaue Einfügen der Sendesignale aller Sender in ein globales Zeitraster auf der Sendeseite und eine entsprechend präzise korrelative Signalverarbeitung in jedem Empfänger. Die empfängerseitige Signalverarbeitung bei einem Bandspreizsystem verlangt grundsätzlich eine Synchronisation eines lokal im Empfänger vorhandenen Spreizungsfunktionsgenerators (im Fall der Frequenzsprungmodulation ist das ein Frequenzsynthesizer) mit der im Empfangssignal enthaltenen Spreizungsfunktion. Das ist notwendig, um die senderseitig durchgeführte spektrale Verteilung der Information auf ein breites Frequenzband wieder rückgängig zu machen.

Das Problem der Empfängersynchronisation läßt sich bei bandspreizenden Nachrichtenübertragungssystemen, die an Stromversorgungsleitungen arbeiten, mit Hilfe der Netzwechselspannung einfach und kostengünstig lösen - siehe z.B. die europäiscnen Patentanmeldungen EP-B1 020 015 und EP-B1-0199 148.

Die Hauptaufgabe einer Empfangseinrichtung in einem Bandspreizsystem mit pseudozufälliger Frequenzsprungmodulation zur Cbertragung digitaler Informationen über Stromversorgungsleitungen ist die perfekte Trennung einer Vielzahl von Signalen mit eng benachbarten Frequenzen. Dazu ist korrelative Signalverarbeitung notwendig. Das Prinzip der aktiven Korrelation ist aus Standard-Lehrbüchern hinreichend bekannt. Aus einem aktiven Korrelator, der allgemein aus einer Multiplizier- und einer Integriereinheit besteht, wird ein signalangepaßtes Filter (engl.: matched filter), z.B. für frequenzsprungmodulierte Signalformen der Chipdauer $T_H$, wenn man durch Synchronisation dafür sorgt, daß die Integiereinheit an jedem Chipintervallende auf Null gesetzt wird, nachdem der während der Chipdauer aufintegrierte Wert zur Weiterverarbeitung abgetastet wurde.

Aufgrund der Obertragungseigenschaften von Stromnetzen auf der Mittel- und Niederspannungseben ist kohärenter Empfang von frequenzsprungmodulierten Signalformen nicht möglich. Die Inkohärenz macht erheblichen Zusatzaufwand im Empfänger erforderlich, denn für inkohärenten Empfang ist eine Quadraturempfänger-Struktur nötig. Der Aufwand für einen derartigen Empfänger in Analogtechnik ist hoch. Denn für jeden Datenbit-Zweig ist ein eigener Quadraturempfänger, bestehend aus je zwei Analogmultiplizierern mit nachgeschalteten löschbaren Integratoren und Frequenzsynthesizern, die die "H"- und "L"-Bit- Signalformen jeweils in Sinus- und in Cosinuslage bereitstellen, nötig. Die Integratorausgangssignale sind in jedem Zweig geometrisch zu addieren und dem Entscheider zuzuführen. Die Fertigung von Empfängern für frequenzsprungmodulierte Signalformen in Analogtechnik ist mit Problemen der Bauteilselektion und aufwendigem Abgleich behaftet. Darüber hinaus ist wenig Flexibilität hinsichlich Parameteränderungen erzielbar. Bei Anderungen der Frequenzen und/oder der Chipdauer $T_H$ beim verwendeten Signalformsatz ist meist ein Umbau der Hardware und generell ein aufwendiger Neuabgleich nicht zu umgehen. Diese Tatsachen haben bisher die breite Einführung von Bandspreizsystemen - insbesondere mit Frequenzsprungmodulation - verhindert, obwohl es an Anwendungsbedarf nicht mangelt und hohe Zuverlässigkeit bereits experimentell nachgewiesen wurde. Hier soll die vorliegende Erfindung Abhilfe schaffen.

Eine entscheidende Voraussetzung bei der vorliegenden Erfindung ist, daß die korrelative Signalverarbeitung, also der Multiplizier- und der Integriervorgang, digital bewerkstelligt werden. Am Empfängereingang wird daher das Empfangssignal mit der Abtastfrequenz $f_A = 1/T_A$ abgetastet und digitalisiert, z.B. mit 8bit Auflösung. Das digitalisierte Empfangssignal wird im folgenden $X(kT_A)$ bezeichnet. Dabei ist $kT_A$ die diskrete Zeit, mit $k=0,1,2...$

Bei der korrelativen Signalverarbeitung wird das Empfangssignal bekanntlich zunächst mit einer Referenzsignalform multipliziert, die häufig eine synchronisierte Kopie der gesendeten Signalform ist, und das Produkt wird anschließend über die Signalformdauer integriert. Bei der digitalen Signalverarbeitung können die benötigten Referenzsignalformen in digitalen Speichern, also in ROMs, PROMs, EPROMs, EEPROMs oder RAMs abgelegt, und mit Hilfe von Adreßzählern passend ausgelesen werden. Beim Einsatz frequenzsprungmodulierter Bandspreizsignalformen sind somit Abtastwerte von Sinus- und Cosinussignalformen abzuspeichern. Wenn bei binärer Obertragung inkohärenter Empfang vorliegt - was bei der Informationsübertragung über Stromnetze die Regel ist - dann muß jeder Abtastwert X des Empfangssignals mit vier Referenzwerten nacheinander multipliziert werden. Die Multiplikationsergebnisse werden vier digitalen Akkumulatoren zugeführt. Dort erfolgt jeweils das Aufsummieren so, daß am Ende einer Chipdauer für den "H"- und für den "L"- Datenbitkanal je ein Inphase- und ein Quadratursignal (HI, HQ; LI, LQ) in digitaler Form zur Verfügung steht. Nach jeweils geometrischer Addition von HI, HQ und LI, LQ kann die Chip-Entscheidung durchgeführt werden. Nach Empfang von m Chips kann dann eine Mehrheitsentscheidung zur Ermittlung des mit größter Wahrscheinlichkeit gesendenten Datenbits erfolgen. Es ist gesicherte theoretische Erkenntnis, daß m stets ungerade zu wählen ist, so daß eine Mehrheitsentscheidung immer eindeutig ausfällt.

Bezeichnet man die aus dem Abtastwerte-Speicher auszulesenden Referenzsignale wie folgt:

$$Y_{HI}(kT_A) \text{ ---> Sinusabtastwert "H"-Bit,}$$

$$Y_{HQ}(kT_A) \text{ ---> Cosinusabtastwert "H"-Bit,}$$

$$Y_{LI}(kT_A) \text{ ---> Sinusabtastwert "L"-Bit,}$$

$$Y_{LQ}(kT_A) \text{ ---> Cosinusabtastwert "L"-Bit,}$$

dann berechnen sich unter der Voraussetzung, daß eine Chipdauer $T_H$ durch den Abtasttakt in eine ganze Anzahl

$$\theta = \lceil T_H/T_A \rceil$$

Schritte eingeteilt wird, die 4 Komponenten HI, HQ und LI, LQ wie folgt:

$$HI = \sum_{k=1}^{\theta} X(kT_A) \cdot Y_{HI}(kT_A), \qquad\qquad [1]$$

$$HQ = \sum_{k=1}^{\theta} X(kT_A) \cdot Y_{HQ}(kT_A), \qquad\qquad [2]$$

$$LI = \sum_{k=1}^{\theta} X(kT_A) \cdot Y_{LI}(kT_A), \qquad\qquad [3]$$

$$LQ = \sum_{k=1}^{\theta} X(kT_A) \cdot Y_{LQ}(kT_A). \qquad\qquad [4]$$

Die vier obigen Formeln legen den Aufbau eines digitalen Korrelators aus einem Multiplizierer und vier Akkumulatoren nahe. In der Praxis erweist sich diese Vorgehensweise als äußerst unvorteilhaft, insbesondere dann, wenn statt binärer M-äre Übertragung in Betracht kommt, weil dann nicht nur vier, sondern 2·M>4 Akkumulatoren erforderlich sind. Der vorliegenden Erfindung liegt deshalb die Aufgabe zugrunde, ein vorteilhaftes Verfahren und die zugehörige Einrichtung zur korrrelativen digitalen empfängerseitigen Signalverarbeitung in einem System zur Übertragung digitaler Informationen mit Signalformen fester Dauer zu schaffen.

Die Aufgabe wird erfindungsgemäß dadurch gelöst, daß in einem in systolischer Ring-Architektur aufgebauten Arithmetik-Schaltwerk 4 im Verlauf von n Taktschritten n Multiplikationen und n Akkumulationen von Produkten dieser und vorangegangener Multiplikationen ausgeführt werden, wobei digitalisierte Abtastwerte X des Empfangssignals auf einen Eingang 1 des Arithmetik-Schaltwerkes 4 gelangen, und jeder dieser Abtastwerte X mit n Referenzsignalen $Y_i$ (i=1...n), die einem Eingang 2 des Arithmetik-Schaltwerkes zugeführt werden, multipliziert wird, und daß über die während einer Signalformdauer mit dem Schalter 5 hergestellte Rückkopplung die akkumulierten Summen $A_i$ vom Ausgang 6 des Arithmetik-Schaltwerkes 4 dem Eingang 3 nacheinander zwecks Zuaddition des Produktes $X \cdot Y_i$ eingegeben werden, und daß der Schalter 5 nach Ablauf einer Signalformdauer für n Taktschritte umgeschaltet wird, wobei der Rückkoppelring aufgetrennt wird, und die Ergebnisse vom Ausgang 6 des Arithmetik-Schaltwerkes 4 zum Ausgang 7 gelangen und gleichzeitig Nullen als Akkumulationswerte $A_i$ (i=1...n) über Eingang 3 in das Arithmetik-Schaltnetz gelangen, so daß bereits während der Ergebnisausgabe an Ausgang 7 die Startwerte für die folgende Signalform berechnet und im Arithmetik-Schaltwerk gespeichert werden.

Ein wesentliches Merkmal der Erfindung ist, daß das Arithmetik-Schaltwerk 4 aus n Registern R1...Rn und einem geeignet in n Teilnetze T1...Tn partitionierten Schaltnetz besteht, wobei die Teilnetze T1...Tn jeweils zwischen die Register R1...Rn eingefügt sind, und das gesamte Schaltnetz mit drei Binärvariablen X, $Y_i$ und $A_i$, die an den Eingängen 1, 2 und 3 eingegeben werden, Rechenoperationen der Form $X \cdot Y_i + A_i$ ausführt, und wobei aufgrund der Partitionierung des Arithmetik-Schaltnetzes in n Teilnetze und des Einfügens von Registern zwischen diese Teilnetze eine systolische Arbeitsweise vorliegt, mit dem Effekt, daß ein Rechenergebnis $X \cdot Y_i + A_i$ stets nach n Taktschritten als akkumulierte Summe am Ausgang 6 verfügbar wird, die mit dem zugehörigen Referenzwert $Y_i$ über den Eingang 3 wieder ins Schaltnetz gelangt, wobei gleichzeitig n verschiedene Größen der Form $X \cdot Y_i + A_i$ (i=1...n) in Bearbeitung sind.

Des weiteren werden die Referenzsignale $Y_i$ in einem digitalen Speicher 9 in Form eines ROM, PROM, EPROM, EEPROM oder RAM abgelegt, der von dem zyklischen Zähler 10, vorzugsweise in Form eines PAL- oder GAL-Bausteins realisiert, adressiert wird, wobei sich alle Referenzwerte in Adreßbereichen gleicher Länge, entsprechend dem Zählerzyklus, befinden, und wobei die Auswahl der gewünschten Referenzwerte von einer Digitalschaltung 8 aus über Adreßleitungen 11, die an die höherwertigen Adressen des Speichers 9 führen, erfolgt.

Ein Mikroprozessor, ein Mikrocontroller oder eine Digitalschaltung vergleichbarer Funktion 8 betätigt nach Ablauf einer Signalformdauer den Schalter 5 und trennt für n Takte den Rückkoppelweg von Ausgang 6 zu Eingang 3 auf, und liest über den Ausgang 7 die n Ausgabewerte des Arithmetik-Schaltwerkes 4 ein. Die eingelesenen Werte werden weiterverarbeitet, bis am Ausgang 13 der Digitalschaltung 8 die gesendete digitale Information bereitsteht.

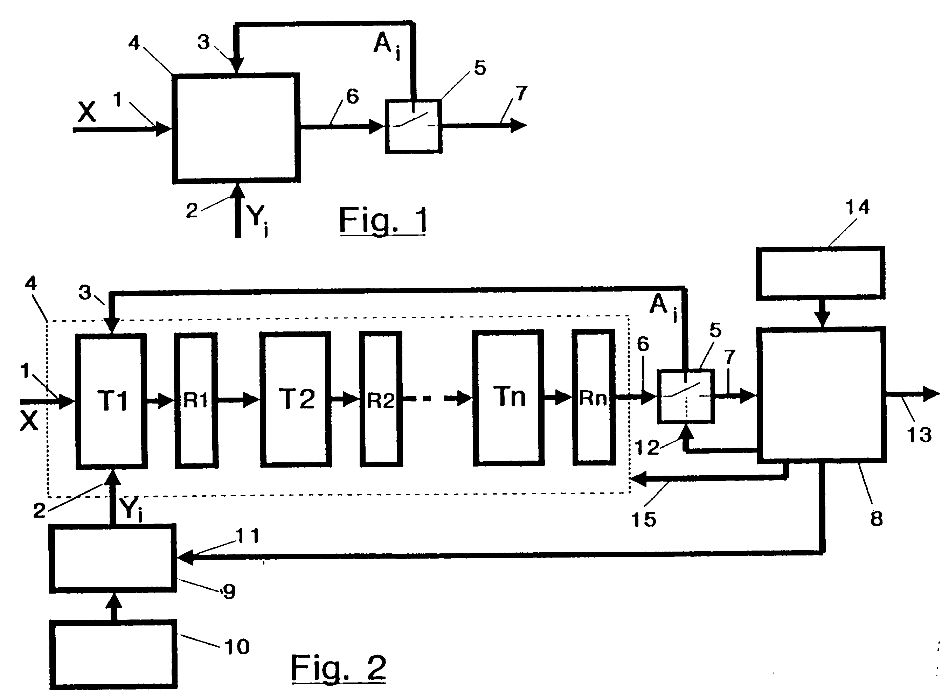

Anhand von Fig. 1 und Fig. 2 wird nun eine Ausführungsform der Erfindung beschrieben. Aus Gründen der Übersicht und Anschaulichkeit wird die Übertragung binärer Informationen (also ein Strom zufällig aufeinander folgender "H"- und "L"-Bits) mit fester Datenrate $r_D$ unter Einsatz von Frequenzsprungmodulation mit m Signalformen der Dauer

$T_H$ betrachtet. Die Erfindung ist selbstverständlich für M-äre Übertragung und Signalformen großer Vielfalt anwendbar.

Zur Vorstellung des Grundgedankens der Erfindung wird zunächst nur die Komponente HI betrachtet, und in Gleichung [1] wird der Term mit dem Argument $\theta T_A$ aus der Summe abgespalten. Man erhält

$$\text{HI} = X(\theta T_A) \cdot Y_{HI}(\theta T_A) + \sum_{k=1}^{\theta-1} X(kT_A) \cdot Y_{HI}(kT_A). \qquad [5]$$

Schreibt man jetzt für die verbliebene Restsumme abkürzend $A_{HI}[(\theta-1)T_A]$, dann wird aus [5]

$$HI = X(\theta T_A) \cdot Y_{HI}(\theta T_A) + A_{HI}[(\theta-1)T_A]. \qquad [6]$$

$A_{HI}[(\theta-1)T_A)]$ ist der im Akkumulator bis zur letzten Summation am Chipende aufgelaufene Wert. Betrachtet man irgendeinen Zeitpunkt $kT_A$ innerhalb einer Chipdauer, dann ergibt sich mit [6]

$$A_{HI}(kT_A) = X(kT_A) \cdot Y_{HI}(kT_A) + A_{HI}[(k-1)T_A]. \qquad [7]$$

Gleichung [7] ist der Kernalgorithmus, der die Arbeitsweise der erfindungsgemäßen Einrichtung zur korrelativen digitalen Signalverarbeitung beschreibt. Die Arbeitsweise läßt sich anhand von Fig. 1 verdeutlichen, wenn man dort $X:=X(kT_A)$, $Y_i:=Y_{HI}(kT_A)$ und $A_i:=A_{HI}[(k-1)T_A)]$ setzt. Im Schaltwerk 4 in Fig. 1 ist gesamte Arithmetik für Berechnungen entsprechend Gleichung [7] - also z.B. $A_{HI}(kT_A)$ - und ein Register zur Speicherung von $A_{HI}[(k-1)T_A)]$ konzentriert. Aus Gründen der Übersicht werden bei den folgenden Erläuterungen die Zeitabhängigkeit und die Indizes der Größen X, Y und A weggelassen; eine Gefahr von Mißverständissen ergibt sich dadurch nicht.

Das in 4 enthaltene Schaltnetz führt eine Multiplikation von zwei Binärvariablen X und Y durch, die z.B in Zweierkomplementdarstellung mit 8bit vorliegen, und addiert das Multiplikationsergebnis zum Inhalt A des im Schaltwerk 4 enthaltenen Registers. Das Gesamtergebnis $X \cdot Y + A$ wird mit einem Takt als neuer Wert ins Register übernommen. Innerhalb einer Chipdauer läuft so z.B. der Algorithmus nach Gleichung

$$[7] \quad \theta = \lceil T_H/T_A \rceil - \text{mal ab.}$$

Dabei muß der Schalter 5 in Fig. 1 in der oberen Position sein. Am Chipintervallende erfolgt die letzte Rechenoperation entsprechend Gleichung [6], dann wird der Schalter 5 in horizontale Position gebracht. Der nächste Takt am Register bringt jetzt die Komponente HI am Ausgang 7 zur Ausgabe. Währenddessen wird wegen des geöffneten Rückkoppelweges im Schaltnetz $X \cdot Y + 0 = X \cdot Y$ berechnet. So ergibt sich der erste Akkumulatorwert eines neuen Chips, der mit dem nächsten Takt ins Register übernommen wird. Gleichzeitig wird der Schalter wieder in die obere Position gebracht, so daß die Akkumulation nach [7] wie beschrieben ablaufen kann.

An obigem Beispiel wurde gezeigt, daß mit einem Arithmetik-Schaltwerk 4 nach Fig. 1 eine der in den Gleichungen [1]-[4] beschriebenen vier Komponenten ermittelt werden kann. Es ist nun keineswegs erforderlich, die Schaltung nach Fig. 1 vierfach aufzubauen, um alle vier Komponenten zu ermitteln. Der aufwendigste Bestandteil, nämlich das Schaltnetz, wird nur einmal benötigt. Das gilt auch dann, wenn noch mehr als vier Komponenten mit einer Darstellungsform entsprechend [1]-[4] zu ermitteln sind. Das ist von Interesse, wenn man statt der hier als Beispiel betrachteten binären Informationsübertragung die weiter oben genannte Übertragung durchführen wollte. Bei einem M-ären FH-Empfänger ist die gleichzeitige Beobachtung von M>2 frequenzsprungmodulierten Signalformen unterschiedlicher Frequenz erforderlich. Bei inkohärentem Empfang müßten 2M>4 Komponenten mit einer Form analog zu [7] im Empfänger gebildet werden.

Die vier Komponenten HI, HQ und LI, LQ entsprechend den Gleichungen [1]-[4] können durch geeignete Auslegung des Schaltwerkes nach Fig. 1 gewonnen werden. Für das hier betrachtete Beispiel sind vier aufeinanderfolgende, mit gleichem Takt versehene Register an das Arithmetik-Schaltnetz anzufügen. Jeder digitalisierte Abtastwert X des Empfangssignals am Eingang 1 wird jetzt der Reihe nach mit vier Referenzwerten $Y_{HI}, Y_{HQ}$ und $Y_{LI}, Y_{LQ}$, die am Eingang 2 eingespeist werden, multipliziert. Weil dies innerhalb einer Abtastperiode $T_A$ geschehen muß, darf jeder der Referenzwerte nur für die Dauer $T_A/n = T_A/4$ am Eingang 2 anstehen, und die vier auf das Schaltnetz folgenden Register sind mit dem vierfachen Abtasttakt zu betreiben. Ausgehend von der obigen Erläuterung zu Fig. 1 ist jetzt verständlich, wie am Chipintervallende die vier gewünschten Komponenten HI, HQ, LI und LQ zur Ausgabe kommen. Die letzte Rechenoperation in jedem Chipintervall wird an der Komponente LQ vorgenommen. Nach dem nächsten Registertakt gilt folgende Zuordnung der Komponenten zu den Registern, wenn man die vier Register von rechts nach links durchnummeriert, so daß Register 4 am Ausgang 6 liegt: 1-LQ, 2-LI, 3-HQ und 4-HI. Der Schalter wird jetzt in horizontale Position gebracht, und die Rückkopplung zu Eingang 3 bleibt für genau vier Registertakte aufgetrennt. Innerhalb dieser Zeit können die vier Komponenten HI, HQ, LI und LQ in dieser Reihenfolge taktsynchron Ausgang 7 abgegriffen werden. Gleichzeitig wurde im Schaltnetz wegen der offenen Rückkopplung viermal A=0 addiert, so daß beim erneuten Schließen der Rückkopplung folgende Registerinhalte vorliegen:

$$1 - X(T_A) \cdot Y_{LQ}(T_A),$$

$$2 - X(T_A) \cdot Y_{LI}(T_A),$$

$$3 - X(T_A) \cdot Y_{HQ}(T_A),$$

$$4 - X(T_A) \cdot Y_{HI}(T_A).$$

Man sieht, daß während der Ausgabe der zum gerade abgeschlossenen Chipintervall gehörigen Komponenten HI, HQ, LI und LQ ohne Verzug bereits die Anfangswerte der vier Komponenten für das neue Chipintervall gespeichert wurden.

Eine Erweiterung für M-äre Anwendungen ist folgendermaßen möglich: Statt 4 sind 2M Register einzusetzen, und die Taktfrequenz für die Register ist auf $f=2M\cdot(1/T_A)$ zu erhöhen. Ein so erweitertes Arithmetik-Schaltwerk nach Fig. 1 kann gleichzeitig M frequenzsprungmodulierte Signalformen inkohärent empfangen. Selbstverständlich sind jetzt 2M Referenzsignale bereitzuhalten, und das Schaltnetz muß in der Lage sein, die Rechenoperation X·Y+A in einer Zeit, die kürzer oder gleich $T_A/2M$ ist, durchzuführen. Bei analoger Realisierung eines vergleichbaren Empfängers würde jede Erhöhung von M um 1 den Aufbau von zwei kompletten Matched Filtern erfordern, während hier nur zwei Register hinzuzufügen sind.

Der Preis für die einfache Erwelterbarkeit ist also in der Hauptsache ein Schaltnetz mit höherer Rechengeschwindigkeit. Bisher wurde der innere Aufbau des Schaltnetzes in Fig. 1 nicht betrachtet, sondern nur seine Funktion in der Form X·Y+A beschrieben. X und Y sind binäre Variablen mit z.B. 8bit Breite, die miteinander zu multiplizieren sind. A ist eine binäre Variable mit in der Regel über 24bit Breite. Die Additition des 16bit breiten Multiplikationsergebnisses zu A erfordert einen Addierer, bei dessen Aufbau besondere Maßnahmen zum Erreichen der nötigen Arbeitsgeschwindigkeit ergriffen werden müssen. Für die Multiplikation ist aus Geschwindigkeitsgründen parallele Hardware unverzichtbar. Es ist aber keineswegs zwingend nötig, die Rechenoperation X·Y+A konzentriert in einem Schaltnetz durchzuführen. Man erzielt erhebliche Geschwindigkeitsvorteile, wenn man das Schaltnetz in n geeignete Teilnetze T1...Tn zerlegt und diese in einem Aufbau nach Fig. 2 zwischen den Registern R1-R2, R2-R3 ... Rn-R1 einbaut. Ziel einer derartigen Zerlegung sind z.B. Teilnetze gleicher Durchlaufverzögerung. Die Teilnetze T1...Tn, die sich dabei ergeben, können in ihrer Gestalt völlig unterschiedlich sein.

Durch die beschriebene Maßnahme läßt sich die Arbeitsgeschwindigkeit einer Schaltung nach Fig. 2 etwa um den Faktor n steigern. Denn in jedem Taktschritt der Dauer $T_A/n$ ist - zeitlich betrachtet - jetzt nur noch 1/n der Rechenoperation X·Y+A auszuführen. Man kann einen Aufbau nach Fig. 2 mit einem modernen Begriff auch "systolisch" nennen. Dieser Begriff deutet an, daß es sich um eine Digitalschaltung handelt, bei der die Ergebnisse - also z.B. die Komponenten HI, HQ, LI, LQ - beim Durchlauf durch eine "verteilte" Hardware im Verlauf mehrerer Taktschritte aufgebaut werden. Die Bezeichnung systolisch leitet sich aus einer gewissen Analogie der Arbeitsweise einer solchen Digitalschaltung mit dem Blutkreislauf von Lebewesen her.

Hat man das Schaltnetz in Fig. 2 in n geeignete Teilnetze T1...Tn zerlegt, und diese zwischen den Registern R1... Rn angeordnet, dann enthält stets nur das Register Rn fertig berechnete Ergebnisse, und zwar nacheinander für n=4 Werte. Der Inhalt der übrigen n-1 Register erlaubt keine sinnvolle Interpretation.

In Anwendungen zur binären Informationsübertragung über Stromnetze mittels frequenzsprungmodulierter Signalformen sind die Geschwindigkeitsanforderungen an ein Arithmetik-Schaltwerk nach Fig. 2 gering. Bei einer maximalen Empfangsfrequenz von 150kHz genügt beispielsweise eine Abtastfrequenz von 400kHz, so daß das Schaltnetz für jede Rechenoperation X·Y+A rund 625ns zur Verfügung hat. Durch Aufteilung des Schaltnetzes in vier Teilnetze stehen jedem dieser Teilnetze 625ns für seine Teilaufgabe zur Verfügung. Selbst mit heute schon veralteter CMOS-Technologie (z.B. 3μm-Prozeß) sind unter diesen Umständen keine Probleme hinsichtlich der Arbeitsgeschwindigkeit zu befürchten.

Obige Ausführungen machen das Potential, das in dem erfindungsgemäßen neuartigen sytolischen Arithmetik-Schaltwerk-Konzept steckt, deutlich. Mit moderner CMOS-Gate-Array-Technologie (0,7μm-Prozeß) sind z.B. bei 8bit Multiplikationsraten bis über $10^8$/s erzielbar. Es eröffnen sich weite Anwendungsfelder, etwa in der Funkübertragungstechnik, weil z.B. frequenzsprungmodulierte Signalformen mit Frequenzen bis weit in den MHz-Bereich digital verarbeitet werden können.

Die Funktion der weiteren Komponenten 8-15 in Fig. 2 wird im folgenden erläutert. Die Komponente 8 ist z.B. ein Mikroprozessor, ein Mikrocontroller oder eine Digitalschaltung vergleichbarer Funktion, die nach Ablauf einer Signalformdauer den Schalter 5 über eine Steuerleitung 12 betätigt und so für n Takte den Rückkoppelweg von Ausgang 6 zu Eingang 3 auftrennt und über den Ausgang 7 die n Ausgabewerte des Arithmetik-Schaltwerkes 4 einliest und weiterverarbeitet, so daß am Ausgang 13 dieser Digitalschaltung 8 die gesendete digitale Information bereitsteht. Findet beispielsweise binäre Übertragung mit Frequenzsprungmodulation statt, und werden m=5 Signalformen gleicher Dauer $T_H$ und verschiedener Frequenz eingesetzt, dann sind in der Digitalschaltung 8 nach Ablauf eines jeden Chipintervalls jeweils die vom Arithmetik-Schaltwerk 4 kommenden Werte HI,HQ und LI,LQ paarweise geometrisch zu addieren. Für jedes Chip ist durch Vergleich der Ergebnisse dieser Additionen zu ermitteln ob es einem "H"- oder einem "L"-Datenbit zuzuordnen ist. Nach Ablauf von m=5 Chipintervallen fällt die Digitalschaltung 8 eine Mehrheitsentscheidung und gibt das Ergebnis über Ausgang 13 als empfangenes Datenbit aus. Die Synchronisationseinrichtung 14 sorgt über die Digitalschaltung 8 mit Steuerleitungen 15 dafür, daß am Beginn eines Chipintervalls die n Register R1...Rn des Arithmetik-Schaltwerkes 4 entleert sind, und mit Adreßleitungen 11, daß die Referenzsignale $Y_i$ passend zu den Abtastwerten X des erwarteten Empfangssignals bereitstehen. Die Referenzsignale $Y_i$ sind in einem digitalen Speicher 9, der in Form eines ROM, PROM, EPROM, EEPROM oder RAM realisiert werden kann, abgelegt. Der Speicher 9 wird von dem zyklischen Zähler 10, adressiert. Es ist vorteilhaft, alle Referenzwerte in Adreßbereichen gleicher Länge abzulegen. Der Zähler 10 hat dann eine feste Länge und er läßt sich aufwandsgünstig z.B. mit einem PAL-, GAL- oder EPLD-Baustein realisieren. Bei dieser Vorgehensweise erfolgt die Auswahl der gewünschten Referenzwerte $Y_i$ von der Digitalschaltung 8 aus in einfacher Weise über Adreßleitungen 11, die an die höherwertigen Adressen des Speichers 9 führen. Ein entscheidender Vorteil gegenüber einer andereren Vorgehensweise, wie sie z.B. der Druckschrift P 40 01 265.4 zu entnehmen ist, ist, daß der Zähler 10 in Fig. 2 außer dem Takt keine weiteren Steuersignale benötigt. Mit der Vorgabe der Startadresse des auszulesenden Bereiches des Abtastwertespeichers 9 in Fig. 2 von der Digitalschaltung 8 aus wird der Auslesevorgang gestartet. Der Zähler 10 adressiert zyklisch den gerade aktuellen Speicherbereich solange, bis ein Frequenzwechsel, der das Auslesen eines anderen Speicherbereiches erfordert, durchgeführt wird. Dazu wird über das in Fig. 2 eingezeichnete Leitungsbündel 11 die neue Startadresse an den Speicher 9 übermittelt.

**Patentansprüche**

1. Verfahren zur korrelativen digitalen empfängerseitigen Signalverarbeitung in einem System zur Übertragung digitaler Informationen mit Signalformen fester Dauer, dadurch gekennzeichnet, daß in einem systolischen Arithmetik-Schaltwerk (4) im Verlauf von n Taktschritten n Multiplikationen und n Akkumulationen von Produkten dieser und vorangegangener Multiplikationen ausgeführt werden, wobei digitalisierte Abtastwerte X des Empfangssignals auf einen ersten Eingang (1) des Arithmetik-Schaltwerkes (4) gelangen, und jeder dieser Abtastwerte X mit n Referenzsignalen $Y_i$, wobei i eine ganze Zahl zwischen 1 und n ist, die einem zweiten Eingang (2) des Arithmetik-Schaltwerkes (4) zugeführt werden, multipliziert wird, und daß über die während einer Signalformdauer mit einem Schalter (5) hergestellte Rückkopplung die akkumulierten Summen $A_i$ vom Ausgang (6) des Arithmetik-Schaltwerkes (4) einem dritten Eingang (3) nacheinander zwecks Zuaddition des Produktes $X \cdot Y_i$ eingegeben werden, und daß der Schalter (5) nach Ablauf einer Signalformdauer für n Taktschritte umgeschaltet wird, wobei der Rückkoppelring aufgetrennt wird und die Ergebnisse vom Ausgang (6) des Arithmetik-Schaltwerkes (4) über dessen Ausgang (7) zu einer weiterverarbeitenden Digitalschaltung (8) gelangen und gleichzeitig Nullen als Akkumulationswerte $A_i$, wobei i eine ganze Zahl zwischen 1 und n ist, über den dritten Eingang (3) in ein Arithmetik-Schaltnetz kommen, so daß bereits während der Ergebnisausgabe an den Ausgang (7) die Startwerte für die folgende Signalform berechnet und im Arithmetik-Schaltwerk gespeichert werden.

2. Verfahren nach Anspruch 1, dadurch gekennzeichnet, daß die Referenzsignale $Y_i$ in einem digitalen Speicher (9) abgelegt sind, der von einem zyklischen Zähler (10) adressiert wird, wobei alle Referenzwerte in Adreßbereichen gleicher Länge, entsprechend dem Zählerzyklus, abgelegt sind, und wobei die Auswahl der gewünschten Referenzwerte von einer Digitalschaltung (8) aus über Adreßleitungen (11), die an die höherwertigen Adressen des Speichers (9) führen, erfolgt.

3. Verfahren nach Anspruch 1 oder 2, dadurch gekennzeichnet, daß eine Digitalschaltung (8) nach Ablauf einer Signalformdauer den Schalter (5) betätigt und für n Takte den Rückkoppelweg auftrennt und über den Ausgang (7) die n Ausgabewerte des Arithmetik-Schaltwerkes (4) einliest und weiterverarbeitet, so daß am Ausgang (13) dieser Digitalschaltung (8) die gesendete digitale Information bereitsteht.

4. Verfahren nach einem der Ansprüche 1 bis 3, dadurch gekennzeichnet daß eine Synchronisationseinrichtung (14) über die Digitalschaltung (8) dafür sorgt, daß am Beginn einer Signalformdauer die n Register des Arithmetik-Schaltwerkes (4) entleert sind, und daß die Referenzsignale $Y_i$ passend zu den Abtastwerten X des erwarteten Empfangssignals bereitstehen.

5. Einrichtung zur korrelativen digitalen Signalverarbeitung in einem Empfänger für digitale Informationen, die mit Signalformen fester Dauer gesendet werden, dadurch gekennzeichnet, daß

a) ein in systolischer Ring-Architektur aufgebautes Arithmetik-Schaltwerk (4) vorhanden ist, das

a 1) einen ersten Eingang (1) aufweist, dem digitalisierte Abtastwerte X eines Empfangssignals zuführbar sind,

a 2) einen zweiten Eingang (2) hat, dem Referenzsignale $Y_i$ zuführbar sind, wobei i eine ganze Zahl zwischen 1 und n ist, und

a 3) einen Ausgang (6) hat, der in einer ersten Schalterstellung eines Schalters (5) mit einem dritten Eingang (3) des Arithmetik-Schaltwerks (4) zur Herstellung einer Rückkopplung verbunden ist, und der in einer zweiten Schalterstellung des Schalters (5) mit einem Ergebnisausgabe-Ausgang (7) verbunden ist, und

b) Mittel (8, 9, 10, 14) vorhanden sind, die das Schaltwerk (4) und den Schalter (5) so steuern, daß

b 1) im Verlauf von n Taktschritten n Multiplikationen und n Akkumulationen von Produkten dieser und vorangegangener Multiplikationen ausgeführt werden, wobei jeder digitalisierte Abtastwerte X des Empfangssignals mit n Referenzsignalen $Y_i$ multipliziert wird und während einer Signalformdauer akkumulierte Summen $A_i$ vom Ausgang (6) des Arithmetik-Schaltwerkes (4) dem dritten Eingang (3) nacheinander zwecks Zuaddition des Produktes $X \cdot Y_i$ eingegeben werden, und daß

b 2) der Schalter (5) nach Ablauf einer Signalformdauer für n Taktschritte umgeschaltet wird, wobei der Rückkoppelring aufgetrennt wird und die Ergebnisse vom Ausgang (6) des Arithmetik-Schaltwerks (4) zum Ergebnisausgabe-Ausgang (7) gelangen und gleichzeitig Nullen als Akkumulationswerte $A_i$, wobei i eine ganze Zahl zwischen 1 und n ist, über den dritten Eingang (3) in ein Arithmetik-Schaltnetz gelangen, so daß bereits während der Ergebnisausgabe an den Ergebnisausgabe-Ausgang (7) die Startwerte für die folgende Signalform berechnet und im Arithmetik-Schaltwerk gespeichert werden.

6. Einrichtung nach Anspruch 5, dadurch gekennzeichnet, daß das Arithmetik-Schaltwerk (4) aus n Registern R1... Rn und einem geeignet in n Teilnetze T1...Tn partitionierten Schaltnetz besteht, wobei die Teilnetze T1...Tn jeweils zwischen die Register R1...Rn eingefügt sind, und das gesamte Schaltnetz dafür eingerichtet ist, mit drei Binär-variablen X, $Y_i$ und $A_i$, die an den drei Eingängen (1), (2) und (3) eingegeben werden, Rechenoperationen der Form $X \cdot Y_i + A_i$ auszuführen, und wobei aufgrund der Partitionierung des Arithmetik-Schaltnetzes in n Teilnetze und das Einfügen von Registern zwischen diese Teilnetze eine systolische Arbeitsweise vorliegt, mit dem Effekt, daß ein Rechenergebnis $X \cdot Y_i + A_i$ stets nach n Taktschritten als akkumulierte Summe am Ausgang (6) verfügbar wird, die mit dem zugehörigen Referenzwert $Y_i$ über den dritten Eingang (3) wieder in Schaltnetz gelangt, wobei gleichzeitig n verschiedene Größen der Form $X \cdot Y_i + A_i$, wobei i eine ganze Zahl zwischen 1 und n ist, in Bearbeitung sind.

7. Einrichtung nach Anspruch 5 oder 6, dadurch gekennzeichnet, daß die Teilnetze T1...Tn aus Digitalschaltungen für schnelle parallele Multiplikation, z. B. bestehend aus Carry-Save-Adder-Arrays und binären Addierschaltungen, z. B. in Form von Carry-Look-Ahead- oder Ripple-Carry-Addierern, aufgebaut sind.

8. Einrichtung nach einem der Ansprüche 5 bis 7, dadurch gekennzeichnet, daß ein digitaler Speicher (9) in Form eines ROM, PROM, EPROM, EEPROM oder RAM vorhanden ist, in dem die Referenzsignale $Y_i$ abgelegt sind, ein zyklischer Zähler (10), der vorzugsweise in Form eines PAL- oder GAL-Bausteins realisiert ist, angeordnet ist, der den digitalen Speicher (9) adressiert, wobei sich alle Referenzwerte in Adreßbereichen gleicher Länge, entsprechend dem Zählerzyklus, befinden, und wobei eine Digitalschaltung (8) vorhanden ist, die über Adressenleitungen (11) mit dem Speicher (9) verbunden ist, und wobei die Auswahl der gewünschten Referenzwerte von der Digitalschaltung (8) aus über die Adreßleitungen (11), die an die höherwertigen Adressen des Speichers (9) führen, erfolgt.

9. Einrichtung nach einem der Ansprüche 5 bis 8, dadurch gekennzeichnet, daß ein Mikroprozessor, ein Mikrocontroller oder eine Digitalschaltung vergleichbarer Funktionen als Mittel (8) zur Betätigung des Schalters (5) vorhanden ist, die nach Ablauf einer Signalformdauer den Schalter (5) betätigt und für n Takte den Rückkoppelweg vom Ausgang (6) zum dritten Eingang (3) auftrennt und über den Ergebnisausgabe-Ausgang (7) die n Ausgabewerte des Arithmetik-Schaltwerkes (4) einliest und weiterverarbeitet, so daß an einem Ausgang (13) dieser Digitalschaltung (8) die gesendete digitale Information bereitsteht.

10. Einrichtung nach einem der Ansprüche 5 bis 9, dadurch gekennzeichnet, daß eine Synchronisationseinrichtung (14) vorhanden ist, die mit der Digitalschaltung (8) und über Steuerleitungen (15) mit dem Arithmetik-Schaltwerk (4) verbunden ist, dafür sorgt, daß am Beginn einer Signalformdauer die n Register R1... Rn des Arithmetik-Schalt-

# EP 0 507 087 B1

werkes (4) entleert sind, und mit Adreßleitungen (11), daß die Referenzsignale $Y_i$ passend zu den Abtastwerten X des erwarteten Empfangssignals bereitstehen.

11. Einrichtung nach einem der Ansprüche 5 bis 10, dadurch gekennzeichnet, daß das Arithmetik-Schaltwerk (4), der Schalter (5) und der Zähler (10) in einer anwendungsspezifischen integrierten Schaltung, z. B. in Form eines Gate Arrays, eines Cell Arrays oder einer Vollkundenschaltung untergebracht sind.

12. Einrichtung nach einem der Ansprüche 5 bis 11, dadurch gekennzeichnet, daß das Arithmetik-Schaltwerk (4), der Schalter (5), der Zähler (10) und die Digitalschaltung (8), z. B. in Form einer Makrozelle, die einen Mikrocontroller-Kern beinhaltet, auf einem Cell Array integriert sind.

## Claims

1. Method for correlative digital signal processing at the receiver end in a system for transmitting digital information using signal shapes of fixed duration, characterized in that in a systolic arithmetic sequential circuit (4) in the course of n clock pulses, n multiplications and n accumulations of products of these and preceding multiplications are executed, digitized sampled values X of the received signal passing to a first input (1) of the arithmetic sequential circuit (4), and each of these sampled values X being multiplied by n reference signals $Y_i$, i being a whole number between 1 and n, which are fed to a second input (2) of the arithmetic sequential circuit (4), and in that for the purpose of the further addition of the product $X \cdot Y_i$, the accumulated sums $A_i$ from the output (6) of the arithmetic sequential circuit (4) are entered sequentially into a third input (3) by means of the feedback produced by a switch (5) during a signal shape duration, and in that after expiry of a signal shape duration the switch (5) is changed over for n clock pulses, the feedback loop being opened and the results passing from the output (6) of the arithmetic sequential circuit (4) via the output (7) thereof to a digital circuit (8), which performs further processing, and at the same time zeros coming via the third input (3) into an arithmetic combinational circuit as accumulation values $A_i$, i being a whole number between 1 and n, with the result that the start values for the following signal shape are calculated and stored in the arithmetic sequential circuit as early as during the output of the results at the output (7).

2. Method according to Claim 1, characterized in that the reference signals $Y_i$ are stored in a digital memory (9) which is addressed by a cyclic counter (10), all the reference values being stored in address ranges of equal length, in accordance with the counter cycle, and the selection of the desired reference values being performed starting from a digital circuit (8) via address lines (11) which lead to the higher-order addresses of the memory (9).

3. Method according to Claim 1 or 2, characterized in that after expiry of a signal shape duration a digital circuit (8) actuates the switch (5) and breaks the feedback path for n clock pulses and reads in and further processes the n output values of the arithmetic sequential circuit (4) via the output (7), with the result that the transmitted digital information is ready at the output (13) of this digital circuit (8).

4. Method according to one of Claims 1 to 3, characterized in that a synchronization device (14) ensures via the digital circuit (8) that the n registers of the arithmetic sequential circuit (4) are emptied at the start of a signal shape duration, and in that the reference signals $Y_i$ are ready in a fashion fitting the sampled values X of the expected received signal.

5. Device for correlative digital signal processing in a receiver for digital information which is transmitted with signal shapes of fixed duration, characterized in that

   a) an arithmetic sequential circuit (4) which is constructed using systolic ring architecture is - present which

      a1) has a first input (1) to which the digitized sampled values X of a received signal can be fed,
      a2) has a second input (2), to which reference signals $Y_i$ can be fed, i being a whole number between 1 and n, and
      a3) has an output (6) which in a first position of a switch (5) is connected to a third input (3) of the arithmetic sequential circuit (4) for the purpose of producing feedback, and which in a second position of the switch (5) is connected to an output (7) for outputting results, and

   b) means (8, 9, 10, 14) are present which control the circuit (4) and the switch (5) in such a way that

b1) in the course of n clock pulses, n multiplications and n accumulations of products of these and preceding multiplications are executed, each digitized sampled values [sic] (X) of the received signal being multiplied by n reference signals $Y_i$, and for the purpose of the further addition of the product $X \cdot Y_i$, the accumulated sums $A_i$ from the output (6) of the arithmetic sequential circuit (4) are entered sequentially into the third input (3) during a signal shape duration, and in that

b2) after expiry of a signal shape duration the switch (5) is changed over for n clock pulses, the feedback loop being opened and the results passing from the output (6) of the arithmetic sequential circuit (4) to the output (7) for outputting results, and at the same time zeros passing via the third input (3) into an arithmetic combinational circuit as accumulation values $A_i$, i being a whole number between 1 and n, with the result that the start values for the following signal shape are calculated and stored in the arithmetic combinational circuit as early as during the output of the results at the output (7) for outputting results.

6. Device according to Claim 5, characterized in that the arithmetic sequential circuit (4) comprises n registers R1... Rn and a combinational circuit suitably partitioned into n subnetworks T1...Tn, the subnetworks T1...Tn being respectively inserted between the registers R1...Rn, and the entire combinational circuit being set up for the purpose of executing arithmetic operations of the form $X \cdot Y_i + A_i$ by means of three binary variables X, $Y_i$ and $A_i$, which are entered at the three inputs (1), (2) and (3), and it being the case that owing to the partitioning of the arithmetic combinational circuit into n subnetworks and to the insertion of registers between these subnetworks a systolic mode of operation exists, with the effect that a computational result $X \cdot Y_i + A_i$ is always available at the output (6) after n clock pulses as an accumulated sum, which passes again into the combinational circuit with the associated reference value $Y_i$ via the third input (3), n different variables of the form $X \cdot Y_i + A_i$, i being a whole number between 1 and n, being simultaneously processed.

7. Device according to Claim 5 or 6, characterized in that the subnetworks T1...Tn are constructed from digital circuits for fast parallel multiplication, for example consisting of carry-save-adder arrays and binary adder circuits, for example in the form of carry-look-ahead adders or ripple-carry adders.

8. Device according to one of Claims 5 to 7, characterized in that there is present in the form of a ROM, PROM, EPROM, EEPROM or RAM a digital memory (9) in which the reference signals $Y_i$ are stored, and a cyclic counter (10) is arranged, which is preferably implemented in the form of a PAL module or GAL module, which addresses the digital memory (9), all the reference values being located in address ranges of equal length, in accordance with the counter cycle, and a digital circuit (8) being present which is connected via address lines (11) to the memory (9), and the selection of the desired reference values being performed starting from the digital circuit (8) via the address lines (11), which lead to the higher-order addresses of the memory (9).

9. Device according to one of Claims 5 to 8, characterized in that a microprocessor, a microcontroller or a digital circuit having comparable functions is present as means (8) for actuating the switch (5), which after expiry of a signal shape duration actuates the switch (5) and breaks the feedback path from the output (6) to the third input (3) for n clock pulses and reads in and further processes the n output values of the arithmetic sequential circuit (4) via the output (7) for outputting results, with the result that the transmitted digital information is ready at an output (13) of this digital circuit (8).

10. Device according to one of Claims 5 to 9, characterized in that a synchronization device (14) is present, which is connected to the digital circuit (8) and, via control lines (15), to the arithmetic sequential circuit (4), [lacuna] ensures that then registers R1...Rn of the arithmetic sequential circuit (4) are emptied at the start of a signal shape duration, and by means of address lines (11), that the reference signals $Y_i$ are ready in a fashion fitting the sampled values X of the expected received signal.

11. Device according to one of Claims 5 to 10, characterized in that the arithmetic sequential circuit (4), the switch (5) and the counter (10) are accommodated in an application-specific integrated circuit, for example in the form of a gate array, a cell array or a full custom integrated circuit.

12. Device according to one of Claims 5 to 11, characterized in that the arithmetic sequential circuit (4), the switch (5), the counter (10) and the digital circuit (8) are integrated on a cell array, for example in the form of a macrocell which contains a microcontroller core.

## Revendications

1. Procédé pour le traitement numérique corrélatif de signaux côté récepteur dans un système de transmission d'informations numériques avec des signaux à durée fixe, caractérisé par le fait que dans une unité logique arithmétique (4) systolique, on réalise au cours de n cycles d'horloge n multiplications et n accumulations de produits de ces multiplications et de multiplications antérieures, des valeurs d'exloration X numérisées du signal reçu étant appliquées à une première entrée (1) de l'unité logique arithmétique (4) et chacune de ces valeurs d'exploration X étant multipliée par n signaux de référence $Y_i$, i étant un nombre entier compris entre 1 et n, qui sont appliqués à une deuxième entrée (2) de l'unité logique arithmétique (4), par le fait que par le bouclage de retour opéré par un commutateur (5) pendant la durée d'un signal on applique successivement les sommes $A_i$ accumulées de la sortie (6) de l'unité logique arithmétique (4) à une troisième entrée (3) à des fins d'addition du produit $X*Y_i$ et par le fait qu'après une durée de signal on commute le commutateur (5) pour n cycles d'horloge, le bouclage de retour étant ouvert et les résultats de la sortie (6) de l'unité logique arithmétique (4) étant transmis par la sortie (7) à un circuit numérique (8) de traitement et simultanément des zéros étant transmis comme valeurs d'accumulation $A_i$, i étant un nombre entier compris entre 1 et n, à une troisième entrée (3) d'un circuit logique arithmétique, de telle sorte pendant l'édition du résultat à la sortie (7), les valeurs de départ pour le signal suivant soient calculées et stockées dans l'unité logique arithmétique.

2. Procédé selon la revendication 1, caractérisé par le fait que l'on inscrit les signaux de référence $Y_i$ dans une mémoire (9) numérique qui est adressée par un compteur (10) cyclique, toutes les valeurs de référence étant inscrites dans des zones d'adresses de même longueur selon le cycle de compteur, et la sélection des valeurs de référence souhaitées étant opérée depuis un circuit numérique (8) par l'intermédiaire de lignes d'adresses (11) qui mènent aux adresses de rang élevé de la mémoire (9).

3. Procédé selon la revendication 1 ou 2, caractérisé par le fait qu'après une durée de signal on actionne le commutateur (5) et on ouvre pour n cycles le bouclage de retour et par l'intermédiaire de la sortie (7) on lit et on traite les n valeurs de sortie de l'unité logique arithmétique (4) de manière à obtenir l'information numérique émise à la sortie (13) de ce circuit numérique (8).

4. Procédé selon l'une des revendications 1 à 3, caractérisé par le fait qu'un dispositif de synchronisation (14) agit par l'intermédiaire du circuit numérique (8) de telle sorte qu'au début d'une durée de signal les n registres de l'unité logique arithmétique (4) soient vidées et que les signaux de référence $Y_i$ adaptés aux valeurs de balayage X du signal de réception attendu soient disponibles.

5. Dispositif pour le traitement numérique corrélatif de signaux dans un récepteur pour des informations numériques avec des signaux à durée fixe, caractérisé par le fait

   a) qu'il est prévu une unité logique arithmétique (4) à architecture en boucle systolique qui présente

   a1) une première entrée (1) à laquelle peuvent être amenées des valeurs numériques d'exploration X d'un signal reçu,
   a2) une deuxième entrée (2) à laquelle peuvent être amenés des signaux de référence $Y_i$, i étant un nombre entier compris entre 1 et n et,
   a3) une sortie (6) qui, dans une première position d'un commutateur (5) est connectée à une troisième entrée (3) de l'unité logique arithmétique (4) afin d'opérer un bouclage de retour et, dans une deuxième position du commutateur (5) est connectée à une sortie (7) d'édition de résultat et

   b) qu'il est prévu des moyens (8, 9, 10, 14) qui commandent l'unité logique (4) et le commutateur (5) de telle sorte que

   b1) au cours de n cycles d'horloge n multiplication et n accumulations des produits de ces multiplications et de multiplications antérieures soient exécutées, chaque valeur d'exploration X numérisée du signal reçu étant multipliée par n signaux de référence $Y_i$ et les sommes $A_i$ cumulées pendant une durée de signal étant envoyées successivement de la sortie (6) de l'unité logique arithmétique (4) à la troisième entrée (3) à des fins d'addition du produit $X*Y_i$ et que
   b2) le commutateur (5), après une durée de signal, est commuté pour n cycles, le bouclage de retour étant ouvert et les résultats de la sortie (6) de l'unité logique arithmétique (4) étant appliqués à la sortie d'édition de résultat (7) et simultanément des zérosétant appliqués comme valeurs d'accumulation $A_i$, i

étant un nombre entier compris entre 1 et n, par la troisième entrée (3) à un circuit logique arithmétique de telle sorte que, pendant l'édition des résultats au niveau de la sortie d'édition de résultat (7), les valeurs de départ pour le signal suivant soient calculées et mémorisées dans l'unité logique arithmétique.

6. Dispositif selon la revendication 5, caractérisé par le fait que l'unité logique arithmétique (4) se compose de n registres R1 ... Rn et d'un circuit logique partitionné en n circuits divisionnaires T1 ...Tn, les circuits divisionnaires T1 ...Tn étant insérés chaque fois entre les registres R1 ... Rn et l'ensemble du circuit logique étant agencé pour réaliser des opérations de calcul du type $X*Y_i+A_i$ avec trois variables binaires $X$, $Y_i$ et $A_i$, qui sont introduites au niveau des trois entrées (1), (2) et (3), et un fonctionnement systolique étant obtenu par la partition du circuit logique arithmétique en n circuits divisionnaires et l'insertion de registres entre ces circuits divisionnaires, avec pour effet qu'un résultat de calcul $X*Y_i+A_i$ est toujours disponible à la sortie (6) sous forme de somme accumulée, après n cycles, laquelle somme est appliquée dans le circuit logique avec la valeur de référence $Y_i$ correspondante par l'intermédiaire de la troisième entrée (3), n grandeurs différentes de la forme $X*Y_i+A_i$ étant traitées simultanément, i étant un nombre entier entre 1 et n.

7. Dispositif selon la revendication 5 ou 6, caractérisé par le fait que les circuits divisionnaires T1 ...Tn sont formés de circuits numériques pour multiplication rapide en parallèle, par exemple à base de "Carry-Save-Adder-Arrays" et de circuits additionneurs binaires par exemple sous la forme d'additionneurs Carry-Look-Ahead ou Ripple-Carry.

8. Dispositif selon l'une des revendication 5 à 7, caractérisé par le fait qu'il comprend une mémoire (9) numérique sous la forme d'une mémoire ROM, PROM, EPROM, EEPROM ou RAM dans laquelle les signaux de référence $Y_i$ sont inscrits, un compteur (10) cyclique qui est réalisé de préférence sous la forme d'un composant PAL ou GAL et adresse la mémoire (9) numérique, toutes les valeurs de référence étant inscrites dans des zones d'adresse de même longueur conformément au cycle du compteur, un circuit numérique (8) qui est connecté à la mémoire (9) par l'intermédiaire de lignes d'adresse (11) étant prévu et la sélection des valeurs de référence souhaitées étant opérée par le circuit numérique (8) par l'intermédiaire des lignes d'adresses (11) menant aux adresses de rang élevé de la mémoire (9).

9. Dispositif selon l'une des revendications 5 à 8, caractérisé par le fait qu'il comprend un microprocesseeur, un microcontrôleur ou un circuit numérique avec des fonctions similaires comme moyen d'actionnement du commutateur (5) qui après une durée correspondant à un signal actionne le commutateur (5) et ouvre pour n cycles le bouclage de retour entre la sortie (6) et la troisième entrée (3) et lit et traite par l'intermédiaire de la sortie d'édition de résultat (7) les n valeurs de sortie de l'unité logique arithmétique (4) de telle sorte que l'information numérique émise soit disponible à une sortie (13) dudit circuit numérique (8).

10. Dispositif selon l'une des revendications 5 à 9, caractérisé par le fait qu'il comprend un dispositif de synchronisation (14) qui est connecté au circuit numérique (8) et à l'unité logique arithmétique (4) par l'intermédiaire de lignes de commande (15) de telle sorte qu'au début d'un signal les n registres R1 ...Rn de l'unité logique arithmétique (4) soient vidés et qu'avec des lignes d'adresses (11), les signaux de référence $Y_i$ soient disponibles conformément aux valeurs d'exploration X du signal reçu attendu.

11. Dispositif selon l'une des revendications 5 à 10, caractérisé par le fait que l'unité logique arithmétique (4), le commutateur (5) et le compteur (10) sont montés dans un circuit intégré spécifique au type d'application, par exemple sous la forme d'une matrice prédiffusée (gate array), d'une matrice de cellules (cell array) ou d'un circuit intégralement réalisé sur demande.

12. Dispositif selon l'une des revendications 5 à 11, caractérisé par le fait que l'unité logique arithmétique (4), le commutateur (5) et le compteur (10) sont intégrés dans une matrice de cellules (cell array), par exemple sous la forme d'une microcellule contenant un noyau microcontrôleur.

Fig. 1

Fig. 2

EP 0 507 087 B1